# EUROPEAN PATENT SPECIFICATION

(11) **EP 4 599 159 B1**
(45) Date of publication and mention of the grant of the patent: **01.04.2026**
(21) Application number: 23805086.8
(22) Date of filing: 16.11.2023
(51) Int. Cl.: F03D 1/06, F03D 7/02, F03D 13/10, F03D 80/50

(54) **DEVICE AND METHOD FOR ASSISTING TO MOUNT OR DISMOUNT A ROTOR BLADE**
VORRICHTUNG UND VERFAHREN ZUR UNTERSTÜTZUNG DER MONTAGE ODER DEMONTAGE EINES ROTORBLATTS
DISPOSITIF ET PROCÉDÉ D'AIDE AU MONTAGE OU AU DÉMONTAGE D'UNE PALE DE ROTOR

(30) Priority: 14.12.2022 EP 22213464
(43) Date of publication of application: 13.08.2025
(73) Proprietor: Siemens Gamesa Renewable Energy A/S, 7330 Brande (DK)
(72) Inventor: FREIRE, Nuno Miguel Amaral, 3150-109 Condeixa (PT); GILLING, Lasse, 7100 Vejle (DK); RADHAKRISHNA PILLAI, Rahul, 8210 Aarhus (DK); THOMSEN, Thyge Skovbjerg, 7400 Herning (DK); KRONBORG, Ebbe, 7500 Holstebro (DK); RAI, Sudhanshu, 7430 Ikast (DK)
(74) Representative: SGRE-Association
(86) International application number: PCT/EP2023/082012
(87) International publication number: WO 2024/125933

(56) References cited:
- EP-A1- 2 677 168
- EP-A1- 2 905 467
- EP-A1- 3 617 498
- KR-B1- 101 400 150

## Description

### Field of invention

The present invention relates to a device for assisting to mount or dismount at least one rotor blade to or from a rotor of a wind turbine and to a method of mounting or dismounting at least one rotor blade to or from a rotor of a wind turbine.

### Art Background

During installation of wind turbines, each blade is mounted separately one by one in the single blade mounting process. In this single blade mounting process, it is required to turn the rotor after mounting the blade so that next blade is mounted in the horizontal position. Turning the unbalanced rotor and locking the rotor for installation/mounting is a technical challenge.

In some wind turbines, the rotor is rotated by means of a hydraulic tool. Recently, as the size of a turbine has significantly been increased, the capacity of the tool must be increased to turn the rotor during blade mounting. As a result, the size and weight of the hydraulic tool also increased with time and posed more challenges in handling as well as use of the tool during mounting the blades. On the one hand, this tool takes longer time to rotate the rotor during blade mounting, and on the other hand, it was necessary to increase the turning speed so that more and more turbines can be installed in less time.

Documents EP3617498 A1 and EP2677168 A1 are prior art examples of a device for assisting to mount or dismount a wind turbine rotor blade.

There may be a need for a device for assisting to mount or dismount at least one rotor blade to or from a rotor of a wind turbine and for a method of mounting or dismounting at least one rotor blade to or from a rotor of a wind turbine, which facilitate mounting the rotor blade to the rotor.

### Summary of the Invention

This need may be met by the subject matter according to the independent claims. Advantageous embodiments of the present invention are described by the dependent claims.

According to a first aspect of the invention there is provided a device for assisting to mount or dismount at least one rotor blade to or from a rotor of a wind turbine. The device comprises an external power source; a generator of the wind turbine, the generator comprising a frequency converter and being mechanically connected to the rotor and electrically connected to the external power source through the frequency converter for supplying power to the generator to rotate the rotor; and a control device which is configured to control the generator to rotate the rotor to a predetermined position, where the blade is to be mounted or dismounted to or from the rotor.

This aspect of the invention is based on the idea that rotating the rotor can be achieved in a fast and accurate manner without any hydraulic tool.

According to a further embodiment of the invention, the device further comprises a brake for decelerating the rotor; an encoder for detecting a rotor position and/or a rotor speed; a locking device for locking and unlocking the rotor; at least one sensor for detecting a locking index arranged at the rotor, the locking index indicating a locking position of the rotor; wherein the control device is configured to control the generator to rotate the rotor towards a target position when the locking device is in an unlocked condition and the brake is in a released condition, while an actual rotor position is determined by the encoder; to control the generator to stop or decelerate the rotor, when the actual rotor position corresponds to the target position of the rotor; to control the generator to rotate the rotor towards the locking position which is the predetermined position; to control the brake to hold the rotor together with the generator, when the sensor detects the locking index so that the rotor is at the locking position; and to control the locking device to lock the rotor when the rotor is at the locking position. In this embodiment, rotating the rotor is achieved by two steps, **i.e.,** a first step of quickly rotating the rotor close to the target position which can be near the predetermined position, for example a rotation by 120°. The control device uses the encoder in this first step to monitor the rotor speed and/or position. The second step is a fine adjustment, wherein the control device uses the sensors to align the locking device, for example a locking hole to a locking pin. The brake is usually already present in the wind turbine.

According to the invention, the wind turbine comprises power sockets which are configured to connect the generator to a grid during operation of the wind turbine, wherein the power sockets are disconnected from the grid and connected to power lines of the external power source during mounting or dismounting the blades. In this embodiment, the sockets are used which are already present in the wind turbine.

According to a further embodiment of the invention, the device further comprises at least one circuit breaker connecting and interrupting at least one of the power lines between the external power source and the generator.

According to a further embodiment of the invention, the external power source is an external generator, an external battery arranged on a helicopter platform of the wind turbine, or an external grid. The external power source can also be a power source in or at an installation vessel with the power conveyed to the generator (or converter) in a nacelle of the wind turbine through temporary or fixed cables in a tower of the wind turbine.

According to a further embodiment of the invention, the locking index is a locking hole provided in the rotor, in particular in a brake disc of the brake, and the locking device comprises a locking pin provided in a stationary frame of the wind turbine, wherein the locking pin can be inserted into the locking hole to lock the rotor when the rotor is at the locking _ositionn.

According to a further embodiment of the invention, two sensors are provided at diametrically opposed positions of the locking pin, wherein the sensors are configured to detect a circumferential edge of the locking hole, respectively. This embodiment uses a simple sensor configuration.

According to a further embodiment of the invention, the sensor is a camera which is configured to detect a circumferential edge of the locking hole.

To unlock the locking device, the control device according to a further embodiment is configured to control the generator to rotate the rotor into a position that the locking pin is out of contact from the circumferential edge of the locking hole, and to control the locking device to withdraw the locking pin from the locking hole to unlock the rotor. For example. If two sensors are provided at diametrically opposed positions of the locking pin, the control device can be configured to determine which one of the two sensors is closer to the circumferential edge of the locking hole, to control the generator to rotate the rotor into a position that the locking pin is out of contact from the circumferential edge of the locking hole, and to control the locking device to withdraw the locking pin from the locking hole to unlock the rotor. In any way, the locking pin can be withdrawn from the locking hole in an unloaded condition.

According to a further aspect of the invention there is provided a method of mounting or dismounting at least one rotor blade to or from a rotor of a wind turbine. The wind turbine comprises an external power source, a generator, the generator comprising a frequency converter and being mechanically connected to the rotor and electrically connected to the external power source through the frequency converter for supplying power to the generator to rotate the rotor, and a control device which is configured to control the generator, the method comprises steps of controlling the generator to rotate the rotor to a predetermined position; and mounting or dismounting the blade to or from the rotor when the rotor is at the predetermined position.

According to a further embodiment of the invention, the wind turbine further comprises a brake for decelerating the rotor, an encoder for detecting a rotor position and/or a rotor speed, at least one sensor for detecting a locking index arranged at the rotor, the locking index indicating a locking position of the rotor, and a locking device for locking and unlocking the rotor. The method comprises steps of controlling the generator to rotate the rotor towards a target position when the locking device is in an unlocked condition and the brake is in a released condition, while an actual rotor position is determined by the encoder; controlling the generator to stop or decelerate the rotor, when the actual rotor position corresponds to the target position of the rotor; controlling the generator to rotate the rotor towards the locking position which is the predetermined position; controlling the brake to hold the rotor together with the generator, when the sensor detects the locking index so that the rotor is at the locking position; controlling the locking device to lock the rotor; and mounting or dismounting the rotor blade to or from the rotor when the rotor is locked by the locking device.

According to a further embodiment of the invention, the external power source is an external generator or an external battery, which are preferably temporarily arranged on a helicopter platform of the wind turbine, and at least one of the encoder and the at least one sensor are temporarily mounted to the wind turbine; and at least one of the external power source, the encoder and the at least one sensor is removed after mounting or dismounting the at least one blade.

According to a further embodiment of the invention, the wind turbine comprises a plurality of blades, and each blade is mounted or dismounted to the rotor substantially with the same blade longitudinal orientation, preferably a horizontal orientation of the blade.

According to a further embodiment of the invention, wherein the generator is mounted in a nacelle of the wind turbine and the method further comprises yawing the nacelle to a mounting or dismounting position before mounting or dismounting the blade.

According to a further embodiment of the invention, the method further comprises at least one of the following: the brake comprises a brake disc and a friction pad operated by a caliper, wherein the caliper holds the friction pad in a continuous contact with the brake disc even in a released condition of the brake; the locking index is a locking hole provided in the rotor, and the locking device comprises a locking pin provided in a stationary frame of the wind turbine, wherein the locking pin can be inserted into the locking hole to lock the rotor when the rotor is at the locking position, wherein the locking pin is operated by a hydraulic pump which is started before inserting or withdrawing the locking pin into or from the locking hole; the locking index is a locking hole provided in the rotor, and the locking device comprises a locking pin provided in a stationary frame of the wind turbine, wherein the locking pin can be inserted into the locking hole to lock the rotor when the rotor is at the locking position, wherein hydraulic accumulators are provided to support and backup a hydraulic fluid at least for one of the locking device and the brake.

In another embodiment, the actuator of the locking pin can be an electric motor, preferably with a gear.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a wind turbine according to an embodiment;
Figure 2 shows power sockets of a generator of the wind turbine according to an embodiment;
Figure 3 shows a locking device according to an embodiment;
Figure 4 shows a torque diagram during rotating the rotor according to an embodiment;
Figure 5 shows a user interface during yawing the nacelle according to an embodiment;
Figure 6 shows a user interface during rotating the rotor according to an embodiment; and
Figure 7 shows a user interface during rotating the rotor according to an embodiment;
Figure 8 shows a user interface during rotating the rotor according to an embodiment.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

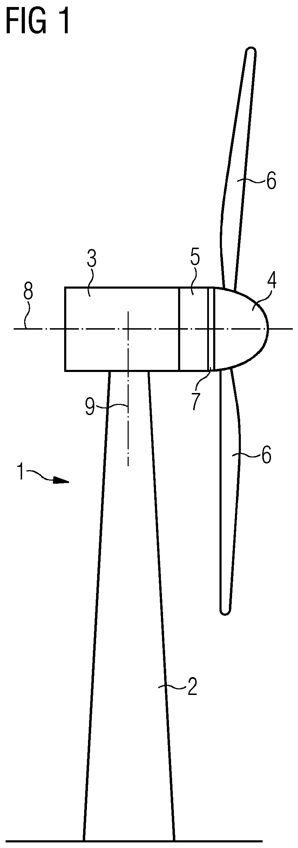

Figure 1 shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor 4 with three rotor blades 6 (of which two rotor blades 6 are depicted in Fig. 1). Each blade 6 is configured to be pitched by a pitch angle about a pitch axis of the blade 6. The rotor 4 is mounted rotatable about a rotation axis 8 (rotor axis) with regard to the nacelle 3 by means of a main bearing 7.

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gear-less, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

According to the present invention, a device for assisting to mount or dismount the blade 6 to or from the rotor 4 of the wind turbine 1 is provided. The device comprises an external power source (not shown). The external power source can be an external generator or an external battery, which is preferably arranged on a helicopter platform of the wind turbine 1. The external power source can also be an external grid, for instance the power grid where to wind turbine 1 is intended to be connected with. The device for assisting to mount or dismount the blade 6 to or from the rotor 4 further comprises the generator 5 of the wind turbine 1, wherein the generator 5 comprises a frequency converter and is mechanically connected to the rotor 4 and electrically connected to the external power source through the frequency converter for supplying power to the generator 5 to rotate the rotor 4 so that the generator 5 works as a motor. The device further comprises a control device (not shown) which is configured to control the generator 5 to rotate the rotor 4 to a predetermined position, where the blades 6 are to be mounted to the rotor 4. When the rotor 4 is at the predetermined position, the blade 6 is mounted to the rotor 4.

The generator 5 works as motor, but the generator 5 can additionally work in a generator mode depending on the intended movement of the installed blade 6. For instance, when lowering a blade 6, the generator 5 can work in the generator mode to generate power for braking or decelerating the rotor 4.

Each blade 6 is mounted to the rotor 4 substantially with the same blade longitudinal orientation, preferably a horizontal orientation of the blade 6. In addition, the nacelle 3 having the rotor 4 can be yawed to a mounting position before mounting the blade 6.

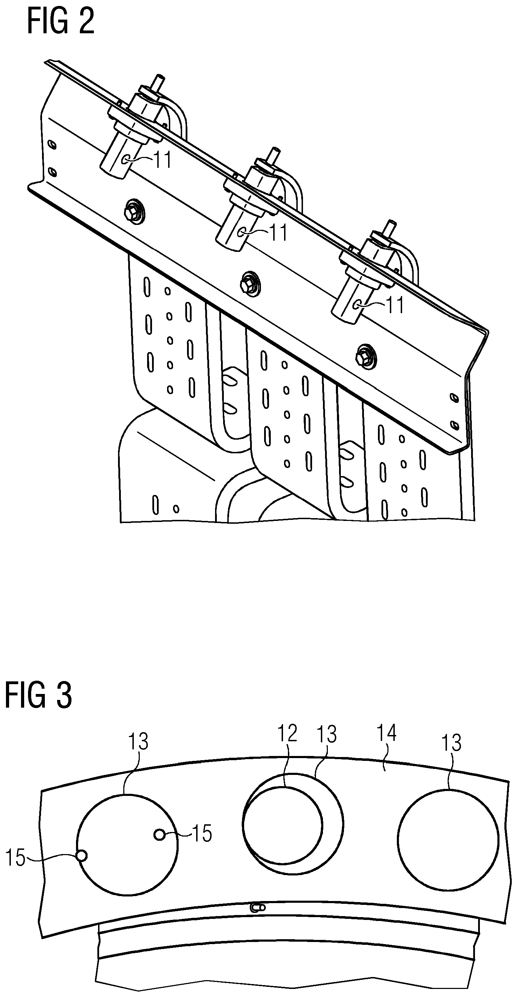

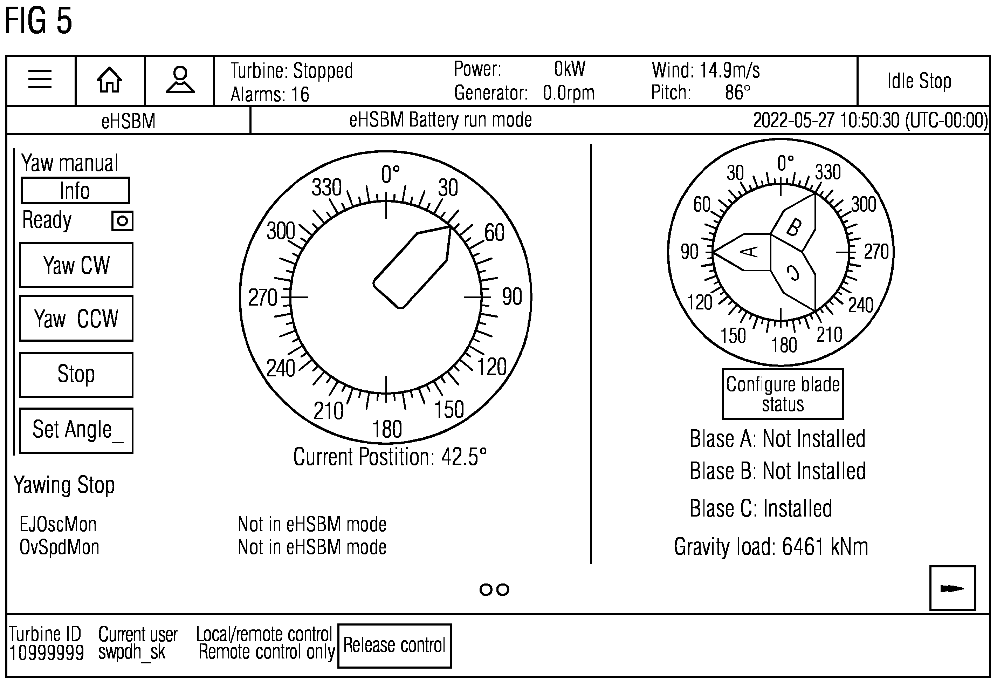

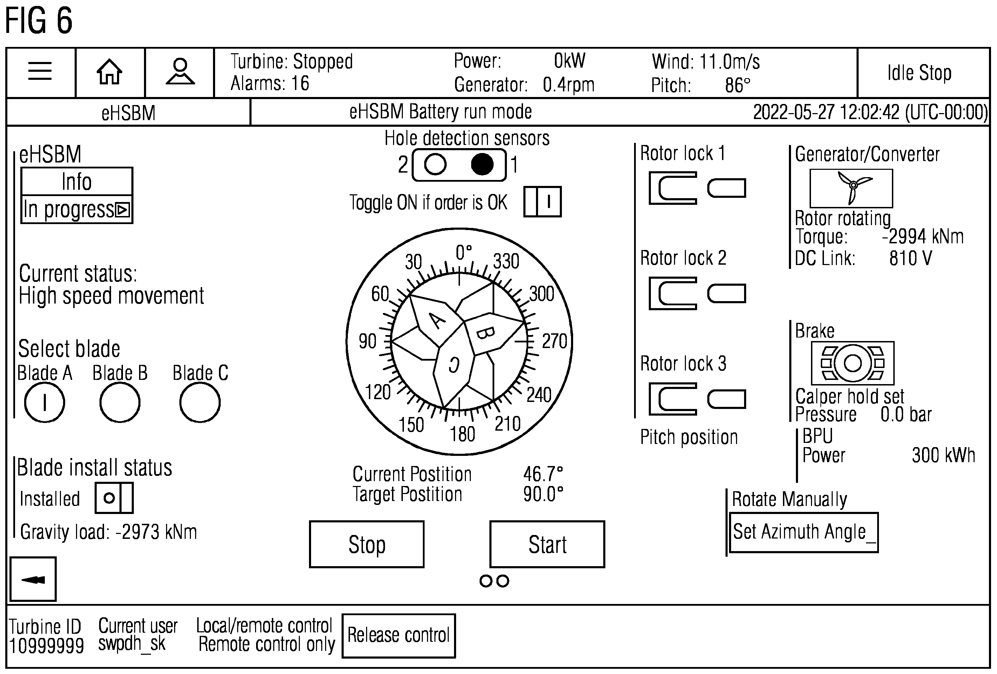

The device for assisting to mount or dismount the blade 6 to or from the rotor 4 further comprises a brake for decelerating the rotor 4 (which can comprise a brake disc 14 in Fig. 3, which is anyway provided in a prior art wind turbine); and an encoder for detecting a rotor position and/or a rotor speed. Preferably, two encoders can be used: A first encoder can be an x/y gravity sensor in the rotor 4 providing an absolute rotor azimuth position as shown in Figure 5 righthand side, and in Figures 6, 7 and 8. The first encoder can be an inherent part of the rotor 4 and is, in this context, used to show an actual rotor azimuth and as a reference for a (coarse) target position for turning the rotor 4, where 0 (zero) degrees is equal to blade A in a 12 o'clock position . Another second encoder can be a temporary incremental encoder with high resolution, which is running on an inner rim of the brake disc 14 and is providing the rotation speed. The second encoder can be used when a coarse target position is reached, to assist the fine positioning relative to the sensors 15.

The device for assisting to mount or dismount the blade 6 further comprises at least one sensor for detecting a locking index arranged at the rotor 4, wherein the locking index indicating a locking position of the rotor 4; and a locking device for locking and unlocking the rotor 4. The rotor blade 6 is mounted to the rotor 4 when the rotor 4 is locked by the locking device.

The control device is configured to control the generator 5 to rotate the rotor 4 towards a target position, when the locking device is in an unlocked condition and the brake is in a released condition, while an actual rotor position is determined by the encoder.

The target position can be a position close the final locking position. For example, the target position can have an angular distance of 120°. The control device (for example embodied by the converter controller) can ramp the torque of the generator 5 to rotate the rotor 4 by 120°.

The control device is configured to control the generator to 5 stop or decelerate the rotor 4, when the actual rotor position corresponds to the target position of the rotor 4, to control the generator 5 to rotate the rotor 4 towards the locking position, which is the predetermined position; to control the brake to hold the rotor 4 together with the generator 5, when the sensor detects the locking index; and to control the locking device to lock the rotor 4 when the rotor 4 is at the locking position. The rotor 4 can additionally be held in position by controlling both the brake and the torque of the generator 5.

Figure 2 shows power sockets 11 of the generator 5. In more detail, the wind turbine 1 usually comprises the frequency converter (not shown) for converting a frequency of the power generated by the generator 5. The sockets 11 are arranged and electrically connected internally at a grid side of the converter. The power sockets 11 are configured to connect the generator 5 to a grid during operation of the wind turbine 1, wherein the power sockets 11 are disconnected from the grid and connected to power lines of the external power source during mounting the blades 6. The device for assisting to mount or dismount the blade 6 to or from the rotor 4 further comprises at least one circuit breaker connecting and interrupting at least one of the power lines between the external power source and the generator 5.

The external power source, which can be a diesel generator or a battery pack having the electrical circuit breaker to provide the power for rotating the rotor 4 during installation of the blades 6, can be a temporary power source which is lifted from a vessel to the top of the nacelle 3 and can preferably be placed onto a helicopter platform during the installation of the blades 6. The power requirement for one installing the blades 6 of one wind turbine 1 is in the range of one MW and needs enough fuel capacity of the diesel generator so it does not require any refueling while it is on the helicopter platform. The circuit breaker being in a circuit breaker box at the external power source can have a plug connection for fast and safe electrical connection. The converter of the wind turbine 1 can be designed with the permanently pre mounted sockets as shown in Figure 2, which are electrically connected internally at the grid side of the converter power circuit.

During mounting the blades 6, a temporary power cable having pre-mounted plug can be connected to this socket and provide power at the grid side of the converter. Such pre mounted socket at the converter enables faster and safe connection of this temporary external power source. All three-sockets can be connected with three AC phases from the diesel generator, but only two sockets can be used if the external power source is the DC battery pack.

During mounting the blades 6, auxiliary systems of the wind turbine 1 can be powered by a three phase 690-volt auxiliary supply from the vessel through a tower cable.

Figure 3 shows a locking device according to an embodiment. The locking device comprises a locking pin 12 provided in a stationary frame of the wind turbine 1, wherein the locking pin can be inserted into locking holes 13 provided in a brake disc 14 of the rotor 4 to lock the rotor 4 when the rotor 4 is at the locking position. For example, if the wind turbine 1 comprises three blades 6, three locking holes 13 can be provided in the brake disc 14 in an angular distance of 120°.

In this embodiment, the locking index is embodied by the locking holes 13. In a modification, the locking index can be an optical marker, which is separately provided from the locking holes 13.

Two sensors 15 are provided, which are configured to detect a circumferential edge of the locking holes 13, respectively. The sensors 15 can be optical sensors. The detection of the circumferential edge of the locking holes 13 can be made by light barrier detection, by image recognition, or by distance detection. The sensors 15 are preferably provided at diametrically opposed positions of the locking pin 12. The mutual distance between the sensors 15 is preferably smaller than a diameter of the locking holes 13. The sensors 15 are preferably arranged on an imaginary line which coincides with the diameter of the locking holes 13. The imaginary line is preferably perpendicular to a radius of the brake disc 14. The sensors 15 can be mounted to a special bracket (not shown). For example, the bracket can temporarily be attached at the locking pin 12.

To detect the circumferential edge of the locking holes 13 during mounting the blades 6, both sensors 15 can temporarily be mounted on the bracket with a precision adjustment option. A pluggable sensor cable can connect these two sensors 15 with the control device which uses the hole detection signal to align the locking pin 12 and the locking holes 13 to enable locking and unlocking the rotor 4. A physical connection of a control cable can be routed (through cables of) the external power source. From the external power source, the control cable can be connected to the control device that communicates with an external power sources circuit breaker as well as with the sensors 15.

When the rotor 4 has reached the above-mentioned target position, a fine adjustment can be performed before the locking operation by means of the sensors 15. The control device controls the generator 5 to rotate the rotor 4 from the target position towards the locking position which is the predetermined position in the meaning of the present patent application. Then the control device controls the brake to hold the rotor 4, when the sensors 15 detect the locking index, i.e., the locking hole 13, particularly the circumferential edge of the locking hole 13. The control device controls the locking device to lock the rotor 4 when the rotor 4 is at the locking position, i.e., the control device can control a hydraulic pump for inserting the locking pin 12 into the locking hole 13.

With an unbalanced rotor 4, the rotor 4 will rest on the locking pins 12 until a generator torque is applied to counteract the gravity moment. In that situation, withdrawing the locking pins 12 from the locking hole 13 will require large pull forces due to friction between the locking pins 12 and the locking hole 13. To withdraw the locking pin 12, it is important that the locking pin 12 is unloaded. When the rotor 4 is to be unlocked by the locking device, the control device is configured to determine which one of the two sensors 15 is closer to the circumferential edge of the locking hole 13, and to control the generator 5 to rotate the rotor 4 into a position such that the locking pin 12 is out of contact from the circumferential edge, and to control the locking device to withdraw the locking pin 12 from the locking hole 13 to unlock the rotor 4.

In a modification, the sensor for detecting the locking index/locking hole 13 can be embodied by a camera (not shown). In such modified embodiment, the sensors 15 can be omitted. The camera can be used for centering the locking pin 12 to the locking hole 13 so that the rotor 4 is rotated in a manner that the locking pin 12 is out of contact from the surface of the locking hole 13. The camera can be attached close to the locking pin 12.

The external power source, the encoder and the sensors 15 can temporarily be mounted to the wind turbine 1, which means they can be removed after having mounted the blades 6. The temporarily mounted encoder can comprise a pluggable cable connected to a wheel which runs on inner circumference of the brake disc 14. Another side of the cable can be connected to a pre-mounted socket in the converter, and the signal can be used by the converter to precisely measure the rotor speed or rotor position.

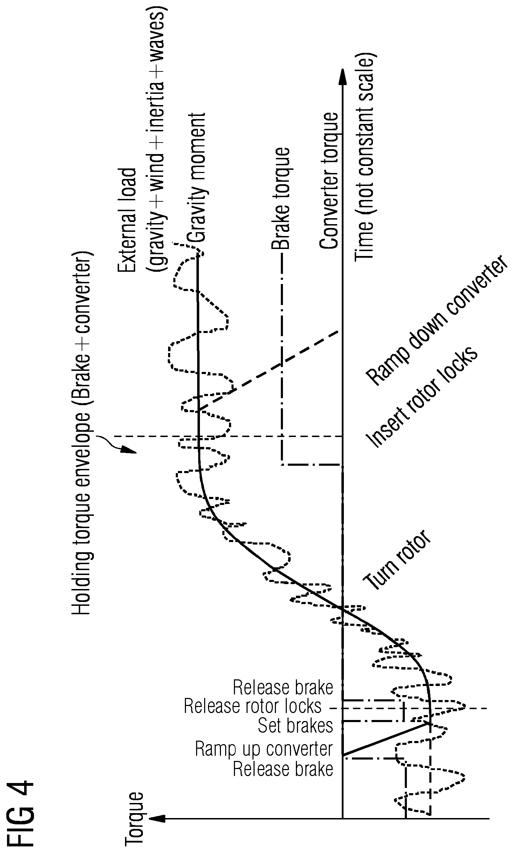

Figure 4 shows a torque diagram during rotating the rotor 4 according to an embodiment. Technicians can interact with the control device using a hand terminal. Here, the control device is ordered to rotate the rotor 4 to the next blade mounting position. The control device then automatically withdraws the locking pin 12 from the locking hole 13, uses the converter and generator 5 to rotate the rotor 4, and then inserts the locking pin 12 again. During rotating the rotor 4, a control software of converter and the control device can monitor and control the position of the rotor 4 by controlling an input power and torque of the generator 5 which is working primarily as the motor in this system.

If the nacelle 3 having the rotor 4 is yawed to a mounting position before mounting the blade 6, the control device can ask for a confirmation that a yaw position of the nacelle 3 is safe before withdrawing the locking pin 12.

The rotor 4 having only one or two blades 6 mounted thereon will tend to turn to a neutral position. If the converter trips during rotating due to any error, the rotor 4 will start turning freely. So, it is critical to have a confirmation before withdrawing the locking pin 12 by the user by means of a hand terminal or user interface that there are no obstacles present in the rotor plane. In other way, this function ensures that, whenever the rotor plane has obstacles, the locking pin 12 remains inserted in the locking hole 13 and the risk of rotor movement is eliminated.

A function of rotating the rotor 4 can be categorized in three parts, i.e., (a) unlocking the locking device by withdrawing the locking pin 12 and releasing the brake, (b) then rotating the rotor 4 to the locking position, and (c) finally applying the brake and inserting the locking pin 12. This function can be initiated from a hand terminal or user interface which can be a human machine interface (HMI) for the control device or a turbine controller. Once a user starts a procedure to rotate the rotor 4, a first control step can ask for a confirmation through the user interface that the rotor plane is free of obstacles. If the user receives a confirmation that the yaw position is safe for unlocking the locking device, the control device can communicate with a converter controller to initiate withdrawing the locking pins 12.

The (incremental, temporary) encoder and the brake are not essential for the present invention. The encoder or the brake or both can be omitted. In a modification, rotating the rotor 4 to the target position can be omitted so that the rotor 4 is directly moved to the locking position which is the predetermined position. The control of rotating the rotor 4 to the locking position can achieved by one sensor 15 or by two sensors 15, or by means of a camera. In this case, the encoder can be omitted. Braking of the rotor 4 can be achieved by controlling the generator torque of the generator 5.

As mentioned above, with an unbalanced rotor, the rotor 4 will rest on the locking pin 12 until a generator torque is applied to counteract the gravity moment. In that situation, releasing the locking pin 12 would require large pull forces due to the friction between the locking pin 12 and the surface of the locking hole 13. To release the locking pin 12, it is important that locking pins 12 are unloaded.

As shown in Figure 3, the distance of the circumferential edge of the locking hole 13 from the sensors 15 provides very distinct information about which side the locking pin 12 is resting on the surface of the locking hole 13. As soon as the control device (i.e., the converter controller) receives information (for instance from a turbine controller) about which sensor 15 is closer to the circumferential edge of the locking hole 13, then the converter controller initiates ramping up a torque of the generator 5 in an opposite direction to unload the locking pin 12. Then, control device (for example embodied by the turbine controller) can initiate a command to a hydraulic valve of the locking device to withdraw the locking pin 12 and to release the mechanical brake.

After the locking pin 12 is withdrawn from the locking hole 13 and the mechanical brake are released, the control device (for example embodied by the converter controller) can ramp the torque of the generator 5 to rotate the rotor 4 by 120° (for example as an input reference from the turbine controller through the HMI user interface) by continuous monitoring a rotor speed and position through the encoder as well as by virtually sensing through high frequency injection (HFI).

As soon as the rotor position reaches the locking position, the control device (for example embodied by the converter controller) can keep the generator torque just sufficient to hold the rotor 4 to stand still, and can expect a signal from the turbine controller for a very small movement for a fine alignment between the locking holes 13 and the locking pin 12 until both sensors 15 detect the corresponding locking hole 13.

As soon as the control device (turbine controller) determines that both sensors 15 are active, which means they are inside the locking hole 13, then the control device activates the mechanical brake to ensure a firm holding of the rotor 4 before inserting the locking pin 12. As soon as the locking pin 12 is inserted into the locking hole 13, a signal can confirm the control device (turbine controller) that the locking pin 12 is in the locked position. Finally, the control device (turbine controller) can instruct the converter control to ramp down the generator torque.

Now, the user can yaw the nacelle 3 to the installation position, in case the yaw position for a safe rotor rotation is not the same as the yaw position for a blade installation.

To ensure that locking and unlocking the rotor 4 happens as fast and safe as possible, different measures can be taken as follows:
The brake can comprise the brake disc 14 and a friction pad operated by a caliper, wherein the caliper holds the friction pad in a continuous contact with the brake disc 14 even in a released condition of the brake.

The locking index can be the locking hole 13 provided in the rotor 4, especially in the brake disc 14, and the locking device comprises the locking pin 12 provided in a stationary frame of the wind turbine 1, wherein the locking pin 12 can be inserted into the locking hole 13 to lock the rotor 4 when the rotor 4 is at the locking position, wherein the locking pin 12 is operated by a hydraulic pump which is started before inserting or withdrawing the locking pin 12 into of from the locking hole 13.

Hydraulic accumulators can be provided to support and backup a hydraulic fluid at least for one of the locking device and the brake. In another embodiment, the actuator of the locking pin can be an electric motor, preferably with a gear.

Figures 5 to 7 show a user interface during rotating the rotor 4 according to an embodiment. The system also allow turning the rotor 4 to other positions than the three positions for horizontal blade mounting. Furthermore, it can be used in "reverse" order for de-mounting of blades.

The entire operation (eHSBM) can automatically be controlled by software, and all relevant controls and status information related to the operation can be shown in the user interface (HMI), particularly in a graphical user interface (GUI) thereof. The user interface can guide the operator to take important decisions before an actual rotation is started.

With reference to Figure 5, a yawing operation of the nacelle 3 can be done clockwise or counterclockwise, or even automatically towards a specific angle. The yaw position of the nacelle 3 is important during the operation of mounting the blades 6, since the entire rotor plane must be free from any obstacle, e.g., a vessel or a crane, in case the operation is aborted before completion.

Another precondition for the software operation is the configuration of a blade status, since the software is calculating the gravity load and the needed converter torque based on the number of blades 6 currently mounted to the rotor 4.

With reference to Figure 6, when a yaw position and a current blade status is configured, the user can proceed to the next step, where the actual operation is controlled and monitored. The blade A, B or C to be installed can be selected using radio buttons, and then a start button can be pressed. The software can then adjust the rotor position automatically using the sensors 15, to be sure that the rotor 4 is not leaning at the locking holes 13, set the brake and then unlock the locking device. Now, the rotor 4 can be controlled by the converter torque, and the brake can be released into a caliper hold mode, where the brake pads are still touching the brake disc 14 to ensure a fast brake later in the process.

The target rotor position and the actual rotor position are shown visually in Figures 6 to 8, and also shown as values below Figures 6 to 8. The status of the locking device, the converter torque and the brake are shown as well. In case the energy is supplied by batteries, the usable energy status of the batteries is also shown.

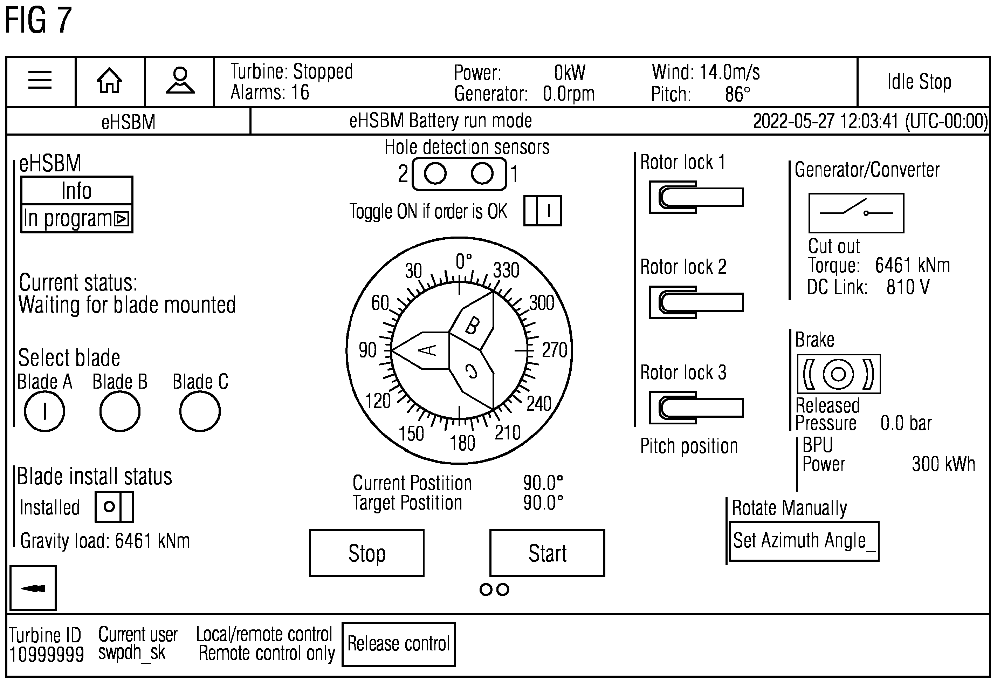

With reference to Figure 7, when the rotation of the rotor 4 has reached the locking position, the software can ensure automatically by use of the two sensors 15 that the rotor 4 is in a position where the locking pin 12 is aligned to the corresponding locking hole 13 in the brake disk 14, set the brake, and automatically insert the locking pin 12 into the locking hole 13 to lock the locking device.

With fully locked rotor 4, the brake is automatically released, and the converter torque is ramped down slowly so that the rotor 4 leans smoothly on the surface of the locking holes 13.

After physical having mounted the blade 6, the user can toggle an "Installed" button in the user interface to complete the operation for that blade 6.

At any time, the user can decide to stop by pressing a "Stop" button. Here, the software will automatically continue to rotate to the nearest position where locking device can be locked, and then the software will set the brake, lock the locking device, release the brake and ramp down the converter torque.

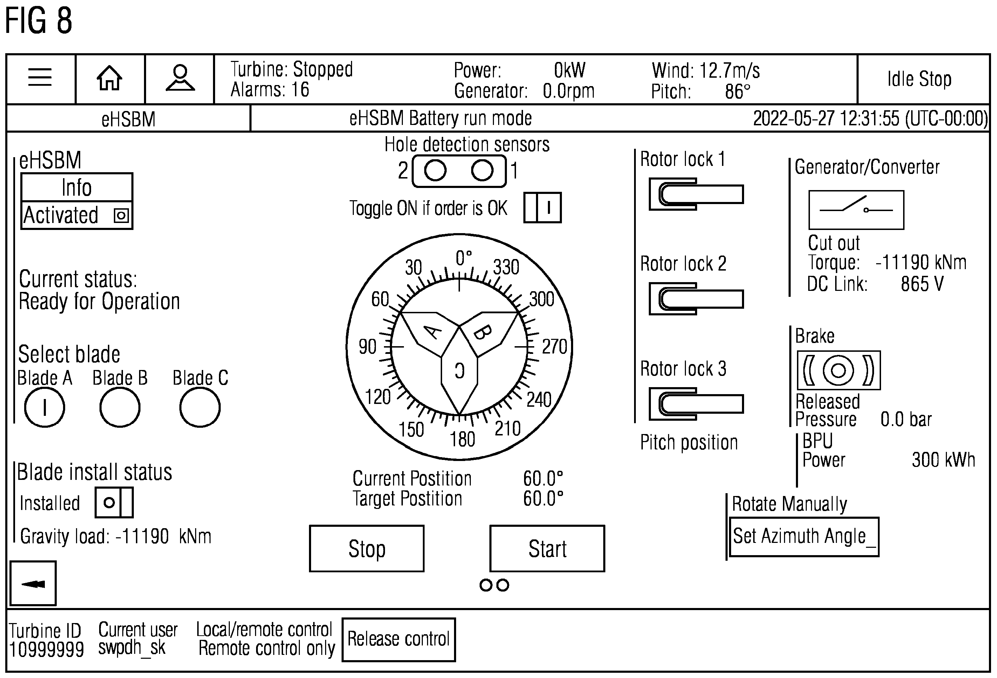

With reference to Figure 8, it is also possible to request a rotation of the rotor 4 to a specific angle using a "Rotate Manually" button, e.g., in case the fully mounted rotor 4 needs to be turned some degrees to avoid obstacles on a vessel. Here, the procedure is the same as described above and will be completed with fully locked locking device.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A device for assisting to mount or dismount at least one rotor blade (6) to or from a rotor (4) of a wind turbine (1), the device comprising:
an external power source;
a generator (5) of the wind turbine (1), the generator (5) comprising a frequency converter and being mechanically connected to the rotor (4) and electrically connected to the external power source through the frequency converter for supplying power to the generator (5) to rotate the rotor (4); and
a control device which is configured to control the generator (5) to rotate the rotor (4) to a predetermined position, where the blade (6) is to be mounted or dismounted to or from the rotor (4);
**characterized in that**
the wind turbine (1) comprises power sockets (11) which are arranged and electrically connected internally at a grid side of the frequency converter and configured to connect the generator (5) to a grid during operation of the wind turbine (1), wherein the power sockets (11) are disconnected from the grid and connected to power lines of the external power source during mounting or dismounting the blades (6).

2. The device as set forth in the preceding claim, further comprising:
a brake for decelerating the rotor (4);
an encoder for detecting a rotor position and/or a rotor speed;
a locking device for locking and unlocking the rotor (4);
at least one sensor (15) for detecting a locking index arranged at the rotor (4), the locking index indicating a locking position of the rotor (4);
wherein the control device is configured to:
control the generator (5) to rotate the rotor (4) towards a target position when the locking device is in an unlocked condition and the brake is in a released condition, while an actual rotor position is determined by the encoder;
control the generator (5) to stop or decelerate the rotor (4), when the actual rotor position corresponds to the target position of the rotor (4);
control the generator (5) to rotate the rotor (4) towards the locking position which is the predetermined position;
control the brake to hold the rotor (4) together with the generator (5), when the sensor detects the locking index so that the rotor (4) is at the locking position; and
control the locking device to lock the rotor (4) when the rotor (4) is at the locking position.

3. The device as set forth in any one of the preceding claims, further comprising:
at least one circuit breaker connecting and interrupting at least one of the power lines between the external power source and the generator (5).

4. The device as set forth in any one of the preceding claims, wherein
the external power source is an external generator, an external battery arranged on a helicopter platform of the wind turbine (1), an external grid, or a power source in or at an installation vessel with the power conveyed to the generator (5) through temporary or fixed cables in a tower (2) of the wind turbine (1).

5. The device as set forth in claim 2, wherein
the locking index is a locking hole (13) provided in the rotor (4), in particular in a brake disc (14), and the locking device comprises a locking pin (12) provided in a stationary frame of the wind turbine (1), wherein the locking pin (12) can be inserted into the locking hole (13) to lock the rotor (4) when the rotor (4) is at the locking position.

6. The device as set forth in the preceding claim, wherein
two sensors (15) are provided at diametrically opposed positions of the locking pin (12), the sensors (15) are configured to detect a circumferential edge of the locking hole (13), respectively.

7. The device as set forth in claim 6, wherein
the sensor (15) is a camera which is configured to detect a circumferential edge of the locking hole (13).

8. The device as set forth in claim 5 to 7, wherein,
to unlock the locking device, the control device is configured to
control the generator (5) to rotate the rotor (4) into a position that the locking pin (12) is out of contact from the circumferential edge of the locking hole (13), and
control the locking device to withdraw the locking pin (12) from the locking hole (13) to unlock the rotor (4).

9. A method of mounting or dismounting at least one rotor blade (6) to or from a rotor (4) of a wind turbine (1), the wind turbine (1) comprising an external power source, a generator (5), the generator (5) comprising a frequency converter and being mechanically connected to the rotor (4) and electrically connected to the external power source through the frequency converter for supplying power to the generator (5) to rotate the rotor (4), and a control device which is configured to control the generator (5), the method comprising:
controlling the generator (5) to rotate the rotor (4) to a predetermined position; and
mounting or dismounting the blade (6) to or from the rotor (4) when the rotor (4) is at the predetermined position;
wherein the wind turbine (1) comprises power sockets (11) which are arranged and electrically connected internally at a grid side of the frequency converter and configured to connect the generator (5) to a grid during operation of the wind turbine (1), wherein the power sockets (11) are disconnected from the grid and connected to power lines of the external power source during mounting or dismounting the blades (6).

10. The method as set forth in the preceding claim, the wind turbine (1) further comprises a brake for decelerating the rotor (4), an encoder for detecting a rotor position and/or a rotor speed, at least one sensor (15) for detecting a locking index arranged at the rotor (4), the locking index indicating a locking position of the rotor (4), and a locking device for locking and unlocking the rotor (4), the method comprising:
controlling the generator (5) to rotate the rotor (4) towards a target position when the locking device is in an unlocked condition and the brake is in a released condition, while an actual rotor position is determined by the encoder;
controlling the generator (5) to stop or decelerate the rotor (4), when the actual rotor position corresponds to the target position of the rotor (4);
controlling the generator (5) to rotate the rotor (4) towards the locking position which is the predetermined position;
controlling the brake to hold the rotor (4) together with the generator (5), when the sensor detects the locking index so that the rotor (4) is at the locking position;
controlling the locking device to lock the rotor (4); and
mounting or dismounting the rotor blade (6) to or from the rotor (4) when the rotor (4) is locked by the locking device.

11. The method as set forth in claim 10, wherein
the external power source is an external generator or an external battery, which are preferably temporarily arranged on a helicopter platform of the wind turbine (1), and at least one encoder and the at least one sensor (15) are temporarily mounted to the wind turbine (1); and
at least one of the external power source, the encoder and the at least one sensor (15) is removed after mounting or dismounting the at least one blade (6).

12. The method as set forth in any one of claims 9 to 11, wherein
the wind turbine (1) comprises a plurality of blades (6), and each blade (6) is mounted or dismounted to or from the rotor (4) substantially with the same blade longitudinal orientation, preferably a horizontal orientation of the blade (6).

13. The method as set forth in any one of claims 9 to 12, wherein:
the generator (5) is mounted in a nacelle (3) of the wind turbine (1) and the method further comprises yawing the nacelle (3) to a mounting or dismounting position before mounting or dismounting the blade (6).

14. The method as set forth in any one of claims 10 to 13, further comprising at least one of the following:
the brake comprises a brake disc (14) and a friction pad operated by a caliper, wherein the caliper holds the friction pad in a continuous contact with the brake disc (14) even in a released condition of the brake;
the locking index is a locking hole (13) provided in the rotor (4), and the locking device comprises a locking pin (12) provided in a stationary frame of the wind turbine (1), wherein the locking pin (12) can be inserted into the locking hole (13) to lock the rotor (4) when the rotor (4) is at the locking position, wherein the locking pin (12) is operated by a hydraulic pump which is started before inserting or withdrawing the locking pin (12) into or from the locking hole (13);
the locking index is a locking hole (13) provided in the rotor (4), and the locking device comprises a locking pin (12) provided in a stationary frame of the wind turbine (1), wherein the locking pin (12) can be inserted into the locking hole (13) to lock the rotor (4) when the rotor (4) is at the locking position, wherein hydraulic accumulators are provided to support and backup a hydraulic fluid at least for one of the locking device and the brake.

## Patentansprüche

1. Vorrichtung zum Unterstützen beim Montieren oder Demontieren mindestens einer Rotorschaufel (6) an einem oder von einem Rotor (4) einer Windturbine (1), wobei die Vorrichtung Folgendes umfasst:
eine externe Stromquelle;
einen Generator (5) der Windturbine (1), wobei der Generator (5) einen Frequenzumrichter umfasst und mechanisch mit dem Rotor (4) verbunden ist und über den Frequenzumrichter elektrisch mit der externen Stromquelle verbunden ist, um den Generator (5) mit Strom zu versorgen, um den Rotor (4) zu drehen; und
eine Steuervorrichtung, die dazu konfiguriert ist, den Generator (5) zu steuern, um den Rotor (4) in eine vorbestimmte Position zu drehen, wobei die Schaufel (6) an oder von dem Rotor (4) zu montieren oder zu demontieren ist;
**dadurch gekennzeichnet, dass**
die Windturbine (1) Stromanschlussdosen (11) umfasst, die innen auf einer Netzseite des Frequenzumrichters angeordnet und elektrisch verbunden sind und dazu konfiguriert sind, den Generator (5) während des Betriebs der Windturbine (1) mit einem Netz zu verbinden, wobei die Stromanschlussdosen (11) während des Montierens oder Demontierens der Schaufeln (6) von dem Netz getrennt sind und mit Stromleitungen der externen Stromquelle verbunden sind.

2. Vorrichtung nach dem vorhergehenden Anspruch, ferner umfassend:
eine Bremse zum Verlangsamen des Rotors (4);
einen Encoder zum Detektieren einer Rotorposition und/oder einer Rotordrehzahl;
eine Verriegelungsvorrichtung zum Verriegeln und Entriegeln des Rotors (4);
mindestens einen Sensor (15) zum Detektieren eines Verriegelungsindexes, der an dem Rotor (4) angeordnet ist, wobei der Verriegelungsindex eine Verriegelungsposition des Rotors (4) anzeigt;
wobei die Steuervorrichtung zu Folgendem konfiguriert ist:
Steuern des Generators (5), um den Rotor (4) zu einer Zielposition zu drehen, wenn sich die Verriegelungsvorrichtung in einem entriegelten Zustand befindet und sich die Bremse in einem gelösten Zustand befindet, während eine tatsächliche Rotorposition durch den Encoder bestimmt wird;
Steuern des Generators (5), um den Rotor (4) zu stoppen oder zu verlangsamen, wenn die tatsächliche Rotorposition der Zielposition des Rotors (4) entspricht;
Steuern des Generators (5), um den Rotor (4) zu der Verriegelungsposition, welche die vorbestimmte Position ist, zu drehen;
Steuern der Bremse, um den Rotor (4) zusammen mit dem Generator (5) zu halten, wenn der Sensor den Verriegelungsindex detektiert, so dass sich der Rotor (4) in der Verriegelungsposition befindet; und
Steuern der Verriegelungsvorrichtung, um den Rotor (4) zu verriegeln, wenn sich der Rotor (4) in der Verriegelungsposition befindet.

3. Vorrichtung nach einem der vorhergehenden Ansprüche, ferner umfassend:
mindestens einen Leistungsschalter, der mindestens eine der Stromleitungen zwischen der externen Stromquelle und dem Generator (5) verbindet und unterbricht.

4. Vorrichtung nach einem der vorhergehenden Ansprüche, wobei
die externe Stromquelle ein externer Generator, eine externe Batterie, die auf einer Hubschrauberplattform der Windturbine (1) angeordnet ist, ein externes Netz oder eine Stromquelle in oder an einem Installationswasserfahrzeug ist, wobei der Strom durch temporäre oder feste Kabel in einem Turm (2) der Windturbine (1) zu dem Generator (5) geleitet wird.

5. Vorrichtung nach Anspruch 2, wobei
der Verriegelungsindex ein Verriegelungsloch (13) ist, das in dem Rotor (4), insbesondere in einer Bremsscheibe (14), bereitgestellt ist, und die Verriegelungsvorrichtung einen Verriegelungsstift (12) umfasst, der in einem stationären Rahmen der Windturbine (1) bereitgestellt ist, wobei der Verriegelungsstift (12) in das Verriegelungsloch (13) eingesetzt werden kann, um den Rotor (4) zu verriegeln, wenn sich der Rotor (4) in der Verriegelungsposition befindet.

6. Vorrichtung nach dem vorhergehenden Anspruch, wobei
zwei Sensoren (15) an diametrisch gegenüberliegenden Positionen des Verriegelungsstifts (12) bereitgestellt sind, wobei die Sensoren (15) dazu konfiguriert sind, jeweils eine Umfangskante des Verriegelungslochs (13) zu detektieren.

7. Vorrichtung nach Anspruch 6, wobei
der Sensor (15) eine Kamera ist, die dazu konfiguriert ist, eine Umfangskante des Verriegelungslochs (13) zu detektieren.

8. Vorrichtung nach Anspruch 5 bis 7, wobei
die Steuervorrichtung zum Entriegeln der Verriegelungsvorrichtung zu Folgendem konfiguriert ist:
Steuern des Generators (5), um den Rotor (4) in eine Position zu drehen, so dass der Verriegelungsstift (12) außer Kontakt von der Umfangskante des Verriegelungslochs (13) ist, und
Steuern der Verriegelungsvorrichtung, um den Verriegelungsstift (12) aus dem Verriegelungsloch (13) zurückzuziehen, um den Rotor (4) zu entriegeln.

9. Verfahren zum Montieren oder Demontieren mindestens einer Rotorschaufel (6) an oder von einem Rotor (4) einer Windturbine (1), wobei die Windturbine (1) eine externe Stromquelle, einen Generator (5), wobei der Generator (5) einen Frequenzumrichter umfasst und mechanisch mit dem Rotor (4) verbunden ist und über den Frequenzumrichter elektrisch mit der externen Stromquelle verbunden ist, um den Generator (5) mit Strom zu versorgen, um den Rotor (4) zu drehen, und eine Steuervorrichtung, die dazu konfiguriert ist, den Generator (5) zu steuern, umfasst, wobei das Verfahren Folgendes umfasst:
Steuern des Generators (5), um den Rotor (4) in eine vorbestimmte Position zu drehen; und
Montieren oder Demontieren der Schaufel (6) an oder von dem Rotor (4), wenn sich der Rotor (4) an der vorbestimmten Position befindet;
wobei die Windturbine (1) Stromanschlussdosen (11) umfasst, die innen auf einer Netzseite des Frequenzumrichters angeordnet und elektrisch verbunden sind und dazu konfiguriert sind, den Generator (5) während des Betriebs der Windturbine (1) mit einem Netz zu verbinden, wobei die Stromanschlussdosen (11) während des Montierens oder Demontierens der Schaufeln (6) von dem Netz getrennt sind und mit Stromleitungen der externen Stromquelle verbunden sind.

10. Verfahren nach dem vorhergehenden Anspruch, wobei die Windturbine (1) ferner eine Bremse zum Verlangsamen des Rotors (4), einen Encoder zum Detektieren einer Rotorposition und/oder einer Rotordrehzahl, mindestens einen Sensor (15) zum Detektieren eines Verriegelungsindexes, der an dem Rotor (4) angeordnet ist, wobei der Verriegelungsindex eine Verriegelungsposition des Rotors (4) anzeigt, und eine Verriegelungsvorrichtung zum Verriegeln und Entriegeln des Rotors (4) umfasst, wobei das Verfahren Folgendes umfasst:
Steuern des Generators (5), um den Rotor (4) zu einer Zielposition zu drehen, wenn sich die Verriegelungsvorrichtung in einem entriegelten Zustand befindet und sich die Bremse in einem gelösten Zustand befindet, während eine tatsächliche Rotorposition durch den Encoder bestimmt wird;
Steuern des Generators (5), um den Rotor (4) zu stoppen oder zu verlangsamen, wenn die tatsächliche Rotorposition der Zielposition des Rotors (4) entspricht;
Steuern des Generators (5), um den Rotor (4) zu der Verriegelungsposition, welche die vorbestimmte Position ist, zu drehen;
Steuern der Bremse, um den Rotor (4) zusammen mit dem Generator (5) zu halten, wenn der Sensor den Verriegelungsindex detektiert, so dass sich der Rotor (4) in der Verriegelungsposition befindet;
Steuern der Verriegelungsvorrichtung, um den Rotor (4) zu verriegeln; und
Montieren oder Demontieren der Rotorschaufel (6) an oder von dem Rotor (4), wenn der Rotor (4) durch die Verriegelungsvorrichtung verriegelt ist.

11. Verfahren nach Anspruch 10, wobei
die externe Stromquelle ein externer Generator oder eine externe Batterie ist, die bevorzugt temporär auf einer Hubschrauberplattform der Windturbine (1) angeordnet ist, und mindestens ein Encoder und der mindestens eine Sensor (15) temporär an der Windturbine (1) montiert sind; und
mindestens eines von der externen Stromquelle, dem Encoder und dem mindestens einen Sensor (15) nach dem Montieren oder Demontieren der mindestens einen Schaufel (6) entfernt wird.

12. Verfahren nach einem der Ansprüche 9 bis 11, wobei
die Windturbine (1) eine Vielzahl von Schaufeln (6) umfasst und jede Schaufel (6) im Wesentlichen mit der gleichen Schaufellängsausrichtung, bevorzugt einer horizontalen Ausrichtung der Schaufel (6), an dem oder von dem Rotor (4) montiert oder demontiert wird.

13. Verfahren nach einem der Ansprüche 9 bis 12, wobei:
der Generator (5) in einer Gondel (3) der Windturbine (1) montiert ist und das Verfahren ferner ein Gieren der Gondel (3) in eine Montage- oder Demontageposition vor dem Montieren oder Demontieren der Schaufel (6) umfasst.

14. Verfahren nach einem der Ansprüche 10 bis 13, ferner umfassend mindestens eines der Folgenden:
wobei die Bremse eine Bremsscheibe (14) und einen Bremsbelag umfasst, der durch einen Bremssattel betrieben wird, wobei der Bremssattel den Bremsbelag sogar in einem gelösten Zustand der Bremse in einem kontinuierlichen Kontakt mit der Bremsscheibe (14) hält;
der Verriegelungsindex ein Verriegelungsloch (13) ist, das in dem Rotor (4) bereitgestellt ist, und die Verriegelungsvorrichtung einen Verriegelungsstift (12) umfasst, der in einem stationären Rahmen der Windturbine (1) bereitgestellt ist, wobei der Verriegelungsstift (12) in das Verriegelungsloch (13) eingesetzt werden kann, um den Rotor (4) zu verriegeln, wenn sich der Rotor (4) in der Verriegelungsposition befindet, wobei der Verriegelungsstift (12) durch eine hydraulische Pumpe betrieben wird, die vor dem Einführen oder Zurückziehen des Verriegelungsstifts (12) in das oder aus dem Verriegelungsloch (13) gestartet wird;
der Verriegelungsindex ein Verriegelungsloch (13) ist, das in dem Rotor (4) bereitgestellt ist, und die Verriegelungsvorrichtung einen Verriegelungsstift (12) umfasst, der in einem stationären Rahmen der Windturbine (1) bereitgestellt ist, wobei der Verriegelungsstift (12) in das Verriegelungsloch (13) eingesetzt werden kann, um den Rotor (4) zu verriegeln, wenn sich der Rotor (4) in der Verriegelungsposition befindet, wobei Hydraulikspeicher bereitgestellt sind, um ein Hydraulikfluid mindestens für eine der Verriegelungsvorrichtung und der Bremse zu unterstützen und zu sichern.

## Revendications

1. Dispositif d'aide au montage ou au démontage d'au moins une pale de rotor (6) sur un rotor (4) ou à partir de celui-ci d'une éolienne (1), le dispositif comprenant :
une source d'alimentation externe ;
un générateur (5) de l'éolienne (1), le générateur (5) comprenant un convertisseur de fréquence et étant relié mécaniquement au rotor (4) et relié électriquement à la source d'alimentation externe à travers le convertisseur de fréquence pour fournir de l'énergie au générateur (5) afin de faire tourner le rotor (4) ; et
un dispositif de commande qui est configuré pour commander le générateur (5) afin de faire tourner le rotor (4) jusqu'à une position prédéterminée, où la pale (6) doit être montée ou démontée sur le rotor (4) ou à partir de celui-ci ;
**caractérisé en ce que**
l'éolienne (1) comprend des prises de courant (11) qui sont disposées et reliées électriquement de manière interne au niveau d'un côté réseau du convertisseur de fréquence et configurées pour relier le générateur (5) à un réseau pendant le fonctionnement de l'éolienne (1), dans lequel les prises de courant (11) sont déconnectées du réseau et reliées à des lignes électriques provenant de la source d'alimentation externe pendant le montage ou le démontage des pales (6).

2. Dispositif selon la revendication précédente, comprenant en outre :
un frein pour décélérer le rotor (4) ;
un codeur pour détecter une position de rotor et/ou une vitesse de rotor ;
un dispositif de verrouillage pour verrouiller et déverrouiller le rotor (4) ;
au moins un capteur (15) pour détecter un index de verrouillage disposé au niveau du rotor (4), l'index de verrouillage indiquant une position de verrouillage du rotor (4) ;
dans lequel le dispositif de commande est configuré pour :
commander le générateur (5) pour faire tourner le rotor (4) vers une position cible lorsque le dispositif de verrouillage est dans un état déverrouillé et que le frein est dans un état desserré, tandis qu'une position réelle du rotor est déterminée par le codeur ;
commander le générateur (5) pour arrêter ou décélérer le rotor (4), lorsque la position réelle du rotor correspond à la position cible du rotor (4) ;
commander le générateur (5) pour faire tourner le rotor (4) vers la position de verrouillage qui est la position prédéterminée ;
commander le frein pour maintenir le rotor (4) conjointement avec le générateur (5), lorsque le capteur détecte l'index de verrouillage de sorte que le rotor (4) soit à la position de verrouillage ; et
commander le dispositif de verrouillage pour verrouiller le rotor (4) lorsque le rotor (4) est à la position de verrouillage.

3. Dispositif selon l'une quelconque des revendications précédentes, comprenant en outre :
au moins un disjoncteur reliant et interrompant au moins l'une des lignes électriques entre la source d'alimentation externe et le générateur (5).

4. Dispositif selon l'une quelconque des revendications précédentes, dans lequel
la source d'alimentation externe est un générateur externe, une batterie externe disposée sur une plate-forme d'hélicoptère de l'éolienne (1), un réseau externe, ou une source d'alimentation dans un navire d'installation ou au niveau de celui-ci avec l'énergie acheminée vers le générateur (5) à travers des câbles temporaires ou fixes dans une tour (2) de l'éolienne (1).

5. Dispositif selon la revendication 2, dans lequel
l'index de verrouillage est un trou de verrouillage (13) prévu dans le rotor (4), en particulier dans un disque de frein (14), et le dispositif de verrouillage comprend une broche de verrouillage (12) prévue dans un châssis fixe de l'éolienne (1), dans lequel la broche de verrouillage (12) peut être insérée dans le trou de verrouillage (13) pour verrouiller le rotor (4) lorsque le rotor (4) est à la position de verrouillage.

6. Dispositif selon la revendication précédente, dans lequel
deux capteurs (15) sont prévus à des positions diamétralement opposées de la broche de verrouillage (12), les capteurs (15) sont configurés pour détecter un bord circonférentiel du trou de verrouillage (13), respectivement.

7. Dispositif selon la revendication 6, dans lequel
le capteur (15) est une caméra qui est configurée pour détecter un bord circonférentiel du trou de verrouillage (13).

8. Dispositif selon les revendications 5 à 7, dans lequel,
pour déverrouiller le dispositif de verrouillage, le dispositif de commande est configuré pour :
commander le générateur (5) pour faire tourner le rotor (4) dans une position telle que la broche de verrouillage (12) soit hors de contact du bord circonférentiel du trou de verrouillage (13), et
commander le dispositif de verrouillage pour retirer la broche de verrouillage (12) à partir du trou de verrouillage (13) pour déverrouiller le rotor (4).

9. Procédé de montage ou de démontage d'au moins une pale de rotor (6) sur un rotor (4) ou à partir de celui-ci d'une éolienne (1), l'éolienne (1) comprenant une source d'alimentation externe, un générateur (5), le générateur (5) comprenant un convertisseur de fréquence et étant relié mécaniquement au rotor (4) et relié électriquement à la source d'alimentation externe à travers le convertisseur de fréquence pour fournir de l'énergie au générateur (5) afin de faire tourner le rotor (4), et un dispositif de commande qui est configuré pour commander le générateur (5), le procédé comprenant les étapes consistant à :
commander le générateur (5) pour faire tourner le rotor (4) jusqu'à une position prédéterminée ; et
monter ou démonter la pale (6) sur le rotor (4) ou à partir de celui-ci lorsque le rotor (4) est à la position prédéterminée ;
dans lequel l'éolienne (1) comprend des prises de courant (11) qui sont disposées et reliées électriquement de manière interne au niveau d'un côté réseau du convertisseur de fréquence et configurées pour relier le générateur (5) à un réseau pendant le fonctionnement de l'éolienne (1), dans lequel les prises de courant (11) sont déconnectées du réseau et reliées à des lignes électriques provenant de la source d'alimentation externe pendant le montage ou le démontage des pales (6).

10. Procédé selon la revendication précédente, l'éolienne (1) comprenant en outre un frein pour décélérer le rotor (4), un codeur pour détecter une position de rotor et/ou une vitesse de rotor, au moins un capteur (15) pour détecter un index de verrouillage disposé au niveau du rotor (4), l'index de verrouillage indiquant une position de verrouillage du rotor (4), et un dispositif de verrouillage pour verrouiller et déverrouiller le rotor (4), le procédé comprenant les étapes consistant à :
commander le générateur (5) pour faire tourner le rotor (4) vers une position cible lorsque le dispositif de verrouillage est dans un état déverrouillé et que le frein est dans un état desserré, tandis qu'une position réelle du rotor est déterminée par le codeur ;
commander le générateur (5) pour arrêter ou décélérer le rotor (4), lorsque la position réelle du rotor correspond à la position cible du rotor (4) ;
commander le générateur (5) pour faire tourner le rotor (4) vers la position de verrouillage qui est la position prédéterminée ;
commander le frein pour maintenir le rotor (4) conjointement avec le générateur (5), lorsque le capteur détecte l'index de verrouillage de sorte que le rotor (4) soit à la position de verrouillage ;
commander le dispositif de verrouillage pour verrouiller le rotor (4) ; et
monter ou démonter la pale de rotor (6) sur le rotor (4) ou à partir de celui-ci lorsque le rotor (4) est verrouillé par le dispositif de verrouillage.

11. Procédé selon la revendication 10, dans lequel
la source d'alimentation externe est un générateur externe ou une batterie externe, qui sont de préférence disposés temporairement sur une plate-forme d'hélicoptère de l'éolienne (1), et au moins un codeur et l'au moins un capteur (15) sont montés temporairement sur l'éolienne (1) ; et
au moins l'un parmi la source d'alimentation externe, le codeur et l'au moins un capteur (15) est retiré après le montage ou le démontage de l'au moins une pale (6).

12. Procédé selon l'une quelconque des revendications 9 à 11, dans lequel
l'éolienne (1) comprend une pluralité de pales (6), et chaque pale (6) est montée ou démontée sur le rotor (4) ou à partir de celui-ci sensiblement avec la même orientation longitudinale de pale, de préférence une orientation horizontale de la pale (6).

13. Procédé selon l'une quelconque des revendications 9 à 12, dans lequel :
le générateur (5) est monté dans une nacelle (3) de l'éolienne (1) et le procédé comprend en outre l'orientation de la nacelle (3) vers une position de montage ou de démontage avant de monter ou de démonter la pale (6).

14. Procédé selon l'une quelconque des revendications 10 à 13, comprenant en outre au moins l'un des éléments suivants :
le frein comprend un disque de frein (14) et une plaquette de frein actionnée par un étrier, dans lequel l'étrier maintient la plaquette de frein en contact continu avec le disque de frein (14) même dans un état desserré du frein ;
l'index de verrouillage est un trou de verrouillage (13) prévu dans le rotor (4), et le dispositif de verrouillage comprend une broche de verrouillage (12) prévue dans un châssis fixe de l'éolienne (1), dans lequel la broche de verrouillage (12) peut être insérée dans le trou de verrouillage (13) pour verrouiller le rotor (4) lorsque le rotor (4) est à la position de verrouillage, dans lequel la broche de verrouillage (12) est actionnée par une pompe hydraulique qui est démarrée avant l'insertion ou le retrait de la broche de verrouillage (12) dans le trou de verrouillage (13) ou à partir de celui-ci ;
l'index de verrouillage est un trou de verrouillage (13) prévu dans le rotor (4), et le dispositif de verrouillage comprend une broche de verrouillage (12) prévue dans un châssis fixe de l'éolienne (1), dans lequel la broche de verrouillage (12) peut être insérée dans le trou de verrouillage (13) pour verrouiller le rotor (4) lorsque le rotor (4) est à la position de verrouillage, dans lequel des accumulateurs hydrauliques sont prévus pour soutenir et secourir un fluide hydraulique pour au moins l'un parmi le dispositif de verrouillage et le frein.
